# FASCICULE DE BREVET EUROPEEN

(11) **EP 2 664 545 B1**
(45) Date de publication et mention de la délivrance du brevet: **13.01.2016**
(21) Numéro de dépôt: 13002220.5
(22) Date de dépôt: 26.04.2013
(51) Int. Cl.: B64C 27/32, B64C 27/12, H02K 7/18, B64D 15/12

(54) **Dispositif d'alimentation électrique d'au moins un équipement d'un rotor d'un aéronef, et aéronef**
Vorrichtung zur Stromversorgung mindestens einer Rotorausrüstung eines Luftfahrzeugs, und Luftfahrzeug
Device for supplying electric power to at least one device of an aircraft rotor and aircraft

(30) Priorité: 16.05.2012 FR 1201410
(43) Date de publication de la demande: 20.11.2013
(73) Titulaire: Airbus Helicopters, 13725 Marignane Cedex (FR)
(72) Inventeur: Giordano, Serge, 13012 Marseille (FR); Bourget, Vincent, 84450 Jonquerettes (FR)
(74) Mandataire: GPI & Associés

(56) Documents cités:
- EP-A1- 2 218 643
- WO-A1-2010/015359
- FR-A1- 2 553 596
- FR-A1- 2 960 516
- GB-A- 584 563
- GB-A- 2 264 812
- GB-A- 2 293 522
- US-A- 5 572 178
- US-A1- 2011 024 567

## Description

La présente invention concerne un dispositif d'alimentation électrique d'au moins un équipement d'un rotor, ainsi qu'un aéronef muni de ce dispositif.

L'invention se situe dans le domaine technique des moyens d'alimentation électrique d'un organe rotatif, et plus particulièrement des organes de dégivrage/antigivrage d'un rotor de giravion.

En effet, certains aéronefs sont munis de dispositifs de dégivrage/antigivrage de surfaces aérodynamiques, et notamment des pales d'un rotor. Le problème du givrage de telles surfaces aérodynamiques est bien connu dans l'industrie aéronautique, le profil aérodynamique de ces surfaces pouvant être défavorablement modifié en raison de la formation de glace en vol suite à l'impact de gouttelettes d'eau en surfusion contenues dans l'atmosphère.

Ce problème est souvent traité en équipant la surface aérodynamique d'une structure chauffante.

Par contre, on comprend qu'il peut être délicat d'alimenter en électricité un équipement présent sur un ensemble tournant à partir d'un générateur électrique présent en repère fixe au sein de la cellule d'un aéronef.

On connaît une pluralité de dispositifs pour acheminer un courant électrique vers un ensemble tournant monté à demeure de manière irréversible sur des hélices, des hélices propulsives ou d'éoliennes notamment.

Le document FR 2 553 596 décrit une hélice incluant des moyens générateurs d'énergie électrique au sein de son moyeu pour alimenter un système électrique de modification du pas des pales de l'hélice et un moyen de dégivrage.

Le document EP 0 629 318 décrit l'utilisation d'un aimant libre en rotation entre deux ensembles de bobines agencés au sein d'une hélice.

Le document EP 0 777 602 comprend un générateur ayant des bobines portées par un rotor, les bobines coopérant avec un aimant permanent fixe.

Le document EP 2 218 643 présente une machine électrique disposée dans une hélice pour alimenter électriquement des résistances électriques. L'alternateur comprend un stator solidarisé à un carter fixe de l'hélice et des bobines solidarisées à un mât tournant de l'hélice.

Le document US 2011/0024567 décrit un appareil agencé dans un turbopropulseur à double hélice contrarotatives pour générer de l'électricité.

Il en va de même pour le document GB 584 563.

Le document WO 2010/015359 décrit des générateurs électriques agencés sur une hélice d'éolienne pour alimenter en électricité des moyens de modification du pas des pales de l'hélice, chaque générateur ayant une partie tournante coopérant avec une couronne crantée de la nacelle de l'hélice.

On constate que certains des précédents documents sont notamment relatifs aux avions qui sont susceptibles de voler dans des nuages chargés de gouttelettes d'eau en surfusion et d'être confrontés au givre en permanence. Dès lors, il peut effectivement être utile d'agencer un dispositif d'alimentation électrique à demeure dans l'hélice d'un tel avion à des fins de dégivrage ou d'antigivrage.

De la même manière, un dispositif permettant d'alimenter un moyen électrique de modification du pas d'une hélice peut être présent en permanence sur cette hélice.

Par contre, certains aéronefs et notamment les giravions ne nécessitent pas l'implémentation permanente d'un tel dispositif d'alimentation électrique.

Par suite, on connaît un dispositif muni d'un générateur de courant électrique alternatif relié à une unité électrique dénommée parfois « power deicing unit » en langue anglaise. L'unité électrique est notamment pourvue d'un redresseur électrique et d'un séquenceur pour alimenter une pluralité de câbles électriques selon une séquence prédéterminée. De plus, par mesure de sécurité, cette unité électrique est doublée.

Le générateur et l'unité électrique sont installés dans un repère fixe à savoir dans la cellule d'un giravion.

Par suite, le dispositif comprend un collecteur électrique comportant une partie non tournante et une partie tournante reliées par un système de balais frottant sur des bagues. La partie non tournante possède par exemple des bagues électriques circulaires alimentées électriquement par des câbles électriques provenant de l'unité électrique, la partie tournante ayant un balai circulant sur ces bagues

Le collecteur électrique peut être agencé de manière réversible pour être utilisé uniquement durant des périodes hivernales ou pour des missions particulières. Toutefois, un tel collecteur électrique est très lourd et difficile à mettre en place, notamment du fait de la présence d'un nombre important de câbles électriques de grandes dimensions et de bagues électriques.

En outre, les frottements de chaque balai du collecteur contre la bague électrique correspondante tendent à dégrader les performances de ce collecteur électrique. Des actions de maintenance nécessitant le démontage du dispositif doivent alors être entreprises relativement souvent. Or, le collecteur électrique étant parfois difficile d'accès, le coût de la maintenance peut être élevé et impose un temps d'immobilisation important du giravion.

Le document FR 2 960 516, qui est considéré comme l'art antérieur le plus proche, présente un dispositif d'alimentation électrique et de contrôle d'un équipement d'un rotor. Ce dispositif est muni d'un générateur de courant électrique alternatif triphasé agencé dans un repère fixe, d'un transformateur à champ tournant muni d'une partie fixe reliée au générateur et d'une partie tournante reliée à un séquenceur qui est agencé dans un repère tournant.

Ce dispositif est intéressant en évitant l'emploi d'un collecteur électrique à balais.

Le document US 5 572 178 présente un transformateur tournant muni de bobinages primaire et secondaire et de circuits magnétiques pour optimiser le passage de lignes de champ magnétique.

On connaît aussi un dispositif d'alimentation électrique d'au moins un équipement d'un rotor d'un aéronef entraîné par un mât. Ce dispositif comprend une canne amovible apte à être solidarisée de manière réversible au mât. La canne comprend de plus un alternateur supérieur et un tube supérieur apte à être solidarisé en rotation au mât, l'alternateur supérieur ayant une pluralité de bobines supérieures fixée au tube supérieur, la canne ayant un arbre portant au moins un aimant permanent supérieur de l'alternateur supérieur. Un mécanisme permet alors à l'arbre et au tube supérieur d'effectuer des mouvements rotatifs distincts.

Ce dispositif est alors un dispositif amovible.

On connaît aussi les documents GB2264812 et GB2293522.

La présente invention a alors pour objet de proposer un dispositif d'alimentation électrique amovible intégrable dans un aéronef visant à minimiser les actions de maintenance.

L'invention vise un dispositif d'alimentation électrique d'au moins un équipement d'un rotor d'aéronef entraîné par un mât. Ce dispositif comprend une canne amovible apte à être solidarisée de manière réversible au mât, la canne ayant un carter tournant muni d'un moyen de fixation au mât et un carter non tournant solidaire d'un moyen de liaison apte à être fixé à un organe de référence de l'aéronef.

Cette canne comprend de plus:
- un convertisseur non tournant fixé au carter non tournant et muni d'une d'entrée apte à être alimentée par un courant électrique d'entrée provenant d'un réseau électrique dudit aéronef, ledit premier convertisseur étant un convertisseur électrique générant un courant électrique alternatif à une fréquence supérieure à un kilohertz à partir du courant électrique d'entrée, et
- un transformateur rotatif intégré dans la canne, le transformateur ayant un organe primaire solidarisé au carter non tournant et un organe secondaire solidarisé au carter tournant, l'organe primaire étant relié au convertisseur non tournant pour recevoir le courant électrique alternatif, et l'organe secondaire étant apte à alimenter électriquement un équipement d'un rotor.

Ainsi, selon l'invention, on utilise un dispositif amovible pouvant être inséré de manière réversible dans le mât d'un rotor. Le carter tournant est alors fixé à ce mât par le moyen de fixation. Un tel moyen de fixation peut inclure une collerette vissée au mât, ou encore à un moyeu solidaire de ce mât.

Par contre, le carter non tournant est fixé à un organe de référence non tournant de l'aéronef. Ce carter non tournant peut alors être dénommé « carter fixe ».

On comprend que le terme « tournant » est associé à des organes effectuant une rotation conjointement avec un mât autour d'un axe de rotation d'un rotor. A l'inverse, l'expression « non tournant » est associée à des organes n'effectuant pas une rotation conjointement avec le mât d'entraînement d'un rotor.

Le carter tournant et les organes associés effectuent donc un mouvement rotatif autour d'un axe de rotation, alors que le carter non tournant est immobile par rapport à cet axe de rotation.

Dès lors, la canne comporte un convertisseur non tournant. Ce convertisseur non tournant peut être alimenté électriquement via son entrée par un courant électrique d'entrée alternatif ou continu. Ce courant électrique d'entrée peut provenir du réseau électrique de bord d'un aéronef.

Ce convertisseur non tournant génère à partir de ce courant électrique d'entrée un courant électrique alternatif à une fréquence supérieure à un kilohertz.

Ce courant électrique alternatif est transmis à un transformateur. On constate de manière surprenante que le transformateur peut être agencé à l'intérieur d'une canne, et donc à l'intérieur d'un mât accueillant en son sein cette canne. La canne est notamment adaptable à un rotor de sustentation d'un aéronef à voilure tournante, présentant pourtant un mât ayant un diamètre relativement faible.

En effet, la mise en oeuvre d'un courant alternatif à haute fréquence permet la mise en oeuvre d'un transformateur insérable dans la canne.

L'organe primaire du transformateur est fixe en étant solidarisé au carter non tournant, l'organe primaire étant relié au convertisseur non tournant pour recevoir le courant électrique alternatif. Par contre, l'organe secondaire est solidarisé au carter tournant.

Le courant alternatif provenant du convertisseur non tournant devient alors un courant alternatif transformé suite à son passage dans le transformateur. Il est à noter que le courant alternatif transformé peut avoir les mêmes caractéristiques que le courant électrique alternatif alimentant le transformateur.

De plus, le transformateur permet de transférer un courant électrique provenant d'un repère fixe, à savoir du convertisseur non tournant, vers un repère tournant associé à un rotor.

Le courant électrique sortant du transformateur peut alors être transmis directement ou indirectement à des équipements électriques du rotor.

Dès lors, la canne selon l'invention autorise le transfert d'un courant électrique d'un repère fixe vers un repère tournant au travers d'un dispositif amovible. Ce caractère amovible du dispositif rend son application particulièrement intéressante notamment dans le domaine technique restreint des giravions. De plus, les actions de maintenance de ce dispositif sont relativement aisées dans la mesure où le dispositif peut être démonté du rotor à cet effet.

En outre, ce dispositif est dépourvu de balais mais met en oeuvre un transformateur rotatif. Ce dispositif tend alors à minimiser les risques d'usure par frottement.

Selon un autre aspect, le transformateur ne représente pas un générateur électrique. Ainsi, le carter tournant et le carter non tournant ne doivent pas nécessairement présenter une différence de vitesse de rotation importante. Cette caractéristique tend à optimiser la fabrication et l'agencement de la canne.

En outre, la canne n'impose pas un transfert d'énergie mécanique entre sa partie non tournante et sa partie tournante. Les pièces peuvent alors être dimensionnées pour minimiser la masse du dispositif.

De plus, la détection de pannes sur un dispositif d'alimentation électrique est parfois délicate. La canne présente un convertisseur non tournant et un transformateur distincts structurellement. Dès lors, le convertisseur peut présenter des moyens de test intégrés pour faciliter la localisation d'une panne le cas échéant.

La synergie des moyens mis en place permet donc d'obtenir un dispositif amovible relativement sûr et optimisé d'un point de vue maintenance.

Ce dispositif peut de plus comporter une ou plusieurs des caractéristiques additionnelles qui suivent.

Le moyen de liaison peut comporter d'une part un moyen d'accouplement autorisant un désalignement entre la canne et l'organe de référence, et d'autre part un raccord autobloquant tel qu'un crabot de fixation pour la fixation à un organe de référence.

Le crabot de fixation autorise alors une fixation aisée, rapide et aveugle à un organe de référence. Ce crabot de fixation permet alors l'indexation mécanique de la canne et notamment du carter non tournant à une partie fixe d'un aéronef.

Le moyen d'accouplement permet de tolérer un désalignement entre le carter non tournant et cet organe de référence. Le moyen d'accouplement a alors notamment pour fonction de compenser des éventuelles déformations du mât en vol.

Tout moyen d'accouplement connu est envisageable. Ce moyen d'accouplement peut par exemple être un moyen muni de diaphragmes.

De plus, la canne ayant une collerette saillante de fixation pour solidariser temporairement le tube supérieur au mât, le dispositif comprend éventuellement une roue en matière souple du groupe des élastomères fixée à cette collerette, cette roue étant pourvue de crans périphériques aptes à coopérer par interférence de forme avec un organe tournant d'un rotor.

La roue a notamment pour fonction d'éviter un blocage du mât en cas de blocage du transformateur.

En outre, le carter tournant et le carter non tournant peuvent coopérer par le biais de moyens de roulement. Par exemple, un carter pénètre au moins partiellement dans l'autre carter, au moins deux moyens de roulement étant interposés entre les deux carters.

Selon une réalisation, le carter non tournant est un tube inférieur creux pénétrant partiellement dans le carter tournant, ce carter tournant étant un tube supérieur creux.

Par ailleurs, le convertisseur non tournant est favorablement agencé à l'intérieur du carter non tournant.

Selon un premier mode de réalisation, l'organe secondaire est relié par une liaison électrique filaire ou non filaire à au moins un équipement du rotor.

Par conte, selon un deuxième mode de réalisation, la canne est pourvue d'un convertisseur tournant fixé au carter tournant, le convertisseur tournant étant relié au transformateur et étant muni d'au moins une sortie pour alimenter électriquement un équipement d'un rotor.

Ce convertisseur tournant permet de maitriser le courant électrique de sortie transmis par la canne à des équipements du rotor.

Le convertisseur tournant peut notamment permettre l'obtention d'un courant électrique de sortie alternatif ou continu.

De plus, ce convertisseur tournant peut aussi être un régulateur de tension, de courant, de puissance.

Ce convertisseur tournant peut aussi comporter des éléments de commande d'équipements électriques du rotor. Par exemple, le convertisseur tournant peut comprendre un séquenceur pour requérir le fonctionnement de ces équipements selon une séquence définie par le constructeur.

Le convertisseur tournant est agencé éventuellement à l'intérieur du carter tournant, en étant solidaire en rotation de ce carter tournant.

Selon une première variante, l'organe primaire et l'organe secondaire sont coaxiaux, l'organe secondaire entourant au moins partiellement l'organe primaire, un entrefer annulaire séparant l'organe secondaire de l'organe primaire. L'organe primaire est alors dans une position centrale, l'organe secondaire étant en périphérie de l'organe primaire.

L'entrefer du transformateur permet notamment de compenser des jeux résiduels éventuels.

Selon une deuxième variante, l'organe primaire et l'organe secondaire sont coaxiaux, l'organe primaire entourant au moins partiellement l'organe secondaire, un entrefer annulaire séparant ledit organe secondaire dudit organe primaire. Désormais, l'organe secondaire est alors dans une position centrale, l'organe primaire étant en périphérie de l'organe secondaire.

Selon une troisième variante l'organe primaire et l'organe secondaire sont agencé successivement l'un après l'autre selon un axe de rotation du carter tournant, un entrefer plan séparant l'organe secondaire de l'organe primaire.

Par ailleurs, le transformateur peut comporter un organe primaire et un organe secondaire redondés.

Il est aussi possible de prévoir deux convertisseurs non tournants et deux convertisseurs tournants le cas échéant.

En outre, le transformateur peut être un transformateur monophasé pour minimiser son encombrement et faciliter son agencement au sein d'un mât.

De plus, ce transformateur peut être un transformateur haute fréquence fonctionnant sur une plage de fréquences allant de 1 kilohertz à 500 kilohertz. Plus la fréquence est élevé plus l'encombrement de certains organes et notamment du transformateur peut être minimisé.

Par ailleurs, la canne peut comporter un moyen de transmission de signaux électriques par modulation d'amplitude de la tension ou du courant pour permettre la transmission de signaux bidirectionnels.

La canne peut comporter un moyen de transmission de signaux électriques par modulation de signal (amplitude, fréquence, superposition HF ou autres), via le transformateur ou par toutes autres technologies de transmission (exemple : inductive, capacitive ou optique) pour permettre la transmission de signaux bidirectionnels.

Ce moyen de transmission de signaux peut inclure un modulateur non tournant et un démodulateur non tournant agencé en amont du transformateur et coopérant avec une interface non tournante, ainsi qu'un modulateur tournant et un démodulateur tournant agencés en aval du transformateur et coopérant avec une interface tournante.

L'invention vise aussi un aéronef muni d'une cellule et d'un organe de référence non tournant, la cellule portant un rotor entraîné en rotation par un mât, ledit aéronef ayant au moins un équipement électrique,

Cet aéronef comporte alors un dispositif d'alimentation électrique dudit équipement tel que décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef muni d'un dispositif d'alimentation électrique,
- la figure 2, une vue d'un dispositif d'alimentation électrique selon un premier mode de réalisation,
- la figure 3, un schéma présentant une roue souple agencée entre un carter tournant et un mât d'un rotor,
- la figure 4, ledit dispositif selon un deuxième mode de réalisation muni d'un convertisseur supérieur,
- les figures 5 à 7, des vues explicitant des variantes du transformateur, et
- la figure 8, un schéma explicitant une réalisation comportant un moyen de transmission de signaux électriques par modulation de signal.

Les éléments présents dans plusieurs figures distinctes sont affectés d'une seule et même référence.

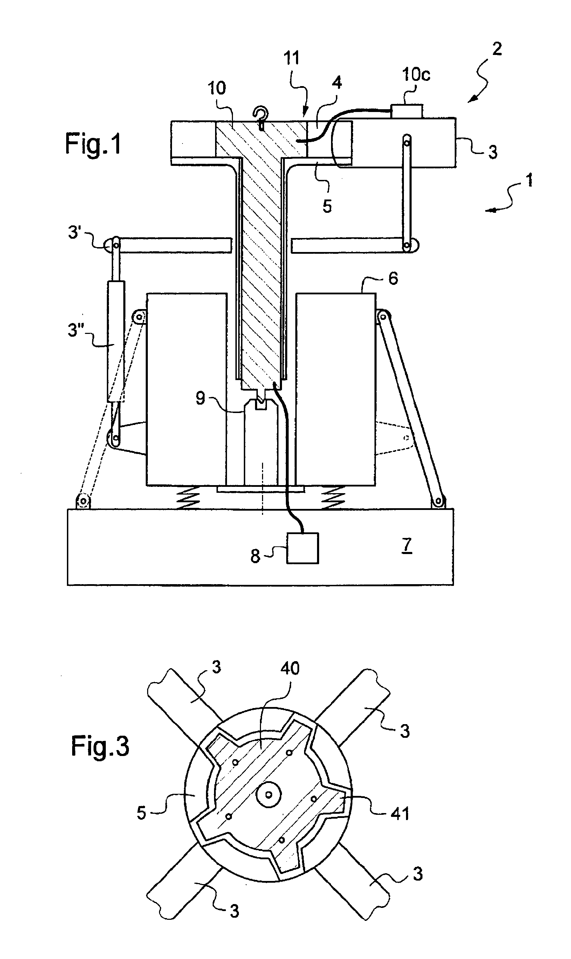

La figure 1 présente un aéronef 1 muni d'une cellule 7 portant une boîte de transmission de puissance 6 entraînant un rotor 2 par le biais d'un mât 5. Le rotor 2 est un rotor de sustentation, voire de propulsion dans le cadre d'un hélicoptère ou équivalent.

Ce mât 5 est solidaire en rotation d'un moyeu 4 du rotor muni d'une pluralité de pales 3, le pas des pales 3 pouvant être modifié par des servocommandes 3" à l'aide d'un ensemble de deux plateaux de commande 3' dénommé parfois « plateaux cycliques » et représenté de manière schématique.

Par ailleurs, le rotor peut comporter des équipements électriques 100, tel qu'un organe de dégivrage par exemple. Dès lors, l'aéronef 1 inclut un dispositif d'alimentation électrique 10 amovible.

Ce dispositif d'alimentation électrique 10 comprend une canne 11 pouvant être insérée au moins partiellement à l'intérieur du mât 5. Le dispositif 10 d'alimentation électrique transmet alors un courant électrique aux équipements du rotor à partir d'un courant électrique d'entrée provenant d'un réseau électrique 8 de l'aéronef.

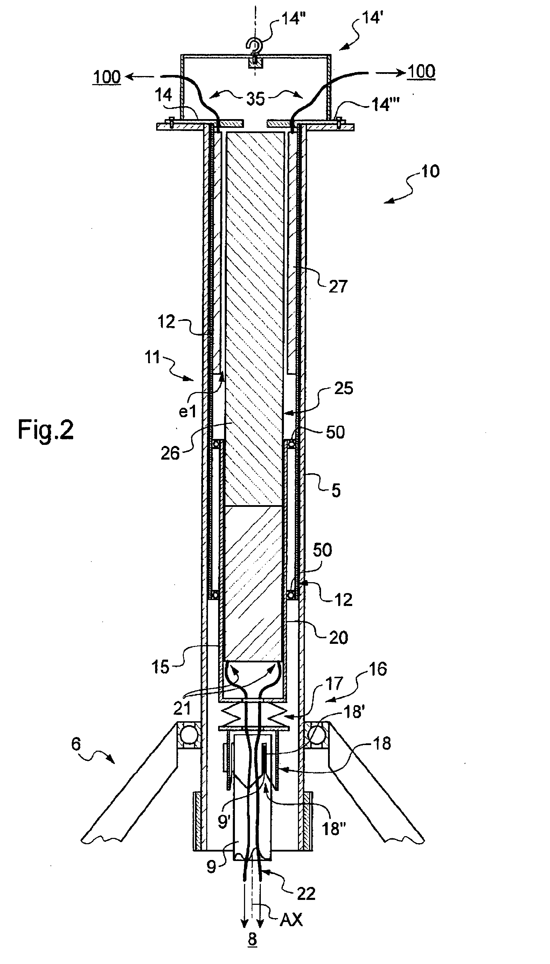

La figure 2 présente le dispositif 10 d'alimentation électrique selon un premier mode de réalisation.

Indépendamment du mode de réalisation, la canne 11 comprend un carter tournant 12 pouvant être fixé au mât 5 par l'intermédiaire d'un moyen de fixation 14.

Ce moyen de fixation peut comprendre une collerette 14"' saillante vissée à un épaulement du mât 5 par exemple. De plus, la collerette 14"' peut coopérer avec un moyen de levage 14' muni d'un crochet de levage 14".

En référence à la figure 3, le dispositif 10 peut inclure un moyen fusible supérieur comprenant une roue 40 interposée entre la collerette 14"' de la canne 11 et le mât 5. Cette roue a notamment pour fonction de minimiser les risques de blocage du rotor, en cas de blocage d'au moins un organe de la canne 11. Cette roue 40 est alors fixée à la collerette et coopère par interférence de forme avec un organe tournant du rotor.

Par exemple, la roue 40 comprend une pluralité de crans 41 logés dans des espaces creux du mât 5. De plus, la roue 40 est réalisée à partir d'un matériau souple à choisir dans le groupe des élastomères.

En fonctionnement normal, le mât 5 entraîne en rotation le carter tournant 12 au travers de la roue 40. Par contre, si un organe tournant de la canne 11 se bloque, la souplesse de la roue permet aux crans 41 de se déformer de manière à ne pas bloquer la rotation du rotor.

La roue 40 est donc un moyen de débrayage mécanique en cas de blocage éventuel du dispositif d'alimentation électrique 10. De plus, on comprend que la roue 40 peut permettre de rattraper des jeux de fabrication, voire de compenser une déformation éventuelle du mât selon certaines phases de vol.

En référence à la figure 2, de manière alternative, les moyens de fixation de la collerette 14 au mât 5 peuvent comprendre une section fusible, ces moyens de fixation pouvant inclure des goupilles ou équivalents par exemple.

Outre un carter tournant, la canne 11 inclut un carter non tournant 15.

La carter tournant 12 et le carter non tournant 15 sont par exemple des tubes creux s'étendant axialement le long de l'axe de rotation AX du rotor.

Un carter peut de plus pénétrer au moins partiellement dans l'autre carter. La canne 11 peut alors être munie d'un moyen de guidage, de centrage et de fixation pourvu d'au moins un moyen de roulement 50 interposé entre le carter tournant 12 et le carter non tournant 15.

Selon l'exemple représenté, le carter non tournant pénètre partiellement dans le carter tournant, deux moyens de roulement 50 à billes ou à rouleaux étant interposés entre le carter tournant 12 et le carter non tournant 15.

Le carter tournant et le carter non tournant sont donc solidaires en translation le long de l'axe de rotation AX, mais désolidarisés en rotation autour de cet axe de rotation AX. Hors jeux fonctionnelles, le dispositif présente un unique degré de liberté en rotation autour de l'axe de rotation AX, entre sa partie inférieure non tournante munie du carter non tournant et sa partie supérieure tournante munie du carter tournant.

Par ailleurs, la canne 11 comporte un moyen de liaison 16 autobloquant pour lier le carter non tournant à un organe de référence 9 non tournant de l'aéronef.

Le carter tournant 12 est donc mis en rotation autour de l'axe de rotation AX par le mât 5 via le moyen de fixation 14, alors qu'au contraire la carter non tournant est immobilisé en rotation autour de l'axe de rotation AX par l'organe de référence 9 via le moyen de liaison 16.

Ce moyen de liaison 16 comporte un raccord autobloquant de type crabot de fixation 18 pouvant être agencé autour de l'organe de référence 9 immobile, tel qu'un pion de fixation solidaire du fond de la boîte de transmission de puissance 6 par exemple. Le crabot de fixation 18 peut comprendre des lumières 18' débouchant sur des plans inclinés 18" qui coopèrent avec des saillies 9' de l'organe de référence immobile 9.

Ce moyen de liaison 16 peut aussi comprendre un moyen d'accouplement 17 agencé entre le crabot de fixation 18 et le carter non tournant 15, pour autoriser un désalignement entre ce carter non tournant 15 et le crabot de fixation 18.

Le moyen de liaison peut en outre comprendre une zone fusible, représentant un moyen de débrayage mécanique en cas de blocage d'un organe tournant du dispositif.

Pour installer le dispositif 10 sur un rotor, un opérateur glisse alors la canne 11 à l'intérieur du mât 5, puis visse la collerette 14"' à l'épaulement du mât 5. L'opérateur peut utiliser le crochet de levage pour manoeuvrer la canne 11.

Cette opération est réversible, le dispositif 10 pouvant être enlevé lorsque le rotor n'est plus muni d'équipements 100 électriques à alimenter électriquement ou pour des actions de maintenance par exemple.

Pour alimenter électriquement de tels équipements 100, la canne 11 est pourvue d'un convertisseur non tournant 20.

Ce convertisseur non tournant 20 et alors fixé par des moyens usuels au carter non tournant 15. Plus précisément, le convertisseur non tournant 20 peut être agencé à l'intérieur du carter non tournant 15, en étant fixé contre une paroi interne de ce carter non tournant 15.

Le convertisseur non tournant est alors muni d'au moins une entrée 21 pour recevoir un courant électrique d'entrée provenant du réseau électrique 8 de l'aéronef. Ainsi, le convertisseur non tournant peut communiquer avec le réseau électrique 8 par une liaison non filaire ou filaire 22.

Ce convertisseur non tournant est adapté au réseau électrique. Par exemple, le convertisseur non tournant peut être adapté à un réseau électrique qui fournit un courant électrique continu de 270 Volts ou encore un courant alternatif de 200 Volts à une fréquence de 400 Hertz.

Ce convertisseur non tournant est alors un convertisseur électrique générant un courant électrique alternatif à une fréquence élevée supérieure à un kilohertz à partir du courant électrique d'entrée. Par exemple, le courant électrique alternatif est monophasé.

Par ailleurs, la canne 11 inclut un transformateur 25 relié au convertisseur non tournant par des liaisons usuelles non représentées, pour transférer un courant électrique d'un repère fixe vers un repère tournant. Par exemple, le transformateur 25 est un transformateur monophasé et/ou fonctionnant sur une plage de fréquences allant de 1 kilohertz à 500 kilohertz.

Ce transformateur 25 est un transformateur rotatif intégré dans la canne comportant un circuit magnétique et des bobinages.

Notamment, le transformateur 25 possède un organe primaire 26 fixe et un organe secondaire 27 tournant autour de l'axe de rotation AX. Un entrefer sépare l'organe primaire 26 et l'organe secondaire 27 pour permettre ce degré de liberté en rotation, tout en compensant d'éventuels jeux résiduels.

Dès lors, l'organe primaire 26 est relié au convertisseur non tournant 20.

De plus, cet organe primaire 26 est solidarisé par des moyens usuels au carter non tournant 15. Par exemple, l'organe primaire est fixé à une paroi interne du carter non tournant 15.

Par contre, l'organe secondaire 27 est solidarisé par des moyens usuels au carter tournant 12. Par exemple, l'organe secondaire 27 est fixé à une paroi interne du carter tournant 12.

Le transformateur est alors alimenté électriquement par le convertisseur non tournant, et restitue un courant alternatif par son organe secondaire.

Selon le premier mode de réalisation de la figure 2, l'organe secondaire 27 peut alors alimenter directement les équipements électriques 100 du rotor par des liaisons non filaires ou filaires 35.

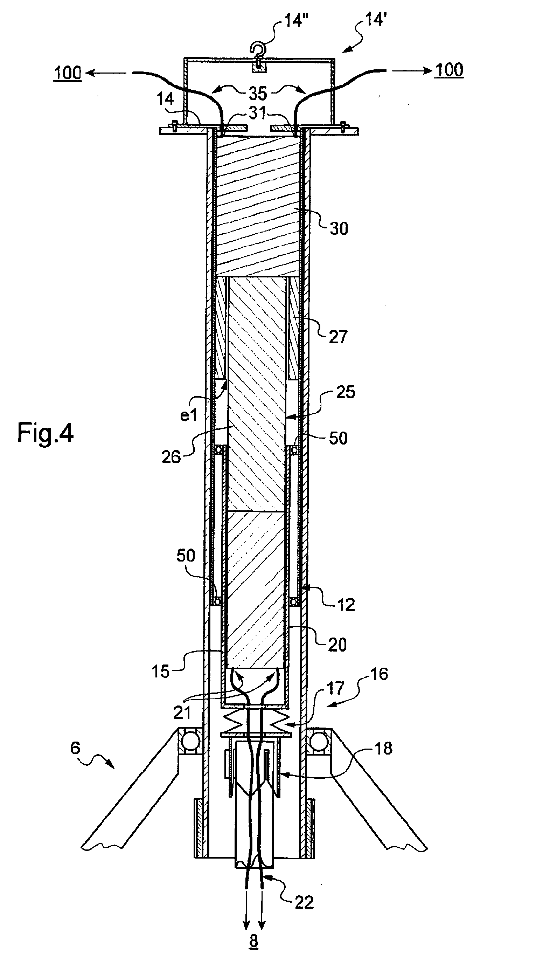

Selon le deuxième mode de réalisation de la figure 4, la canne 11 possède toutefois un convertisseur tournant 30 qui est alimenté électriquement par l'organe secondaire 27 du transformateur.

Le convertisseur tournant 30 est alors solidarisé au carter tournant 12. Par exemple, le convertisseur tournant est agencé dans le carter tournant 12, en étant fixé à une paroi interne de ce carter tournant éventuellement.

Le convertisseur tournant est alors muni d'une sortie 31 apte à être reliée à un équipement électrique 100 du rotor.

Un tel convertisseur tournant 30 peut notamment avoir pour fonction de convertir en courant continu le courant électrique alternatif provenant du transformateur 25.

Par ailleurs, selon une première variante représentée sur les figures 2 et 4, l'organe primaire et l'organe secondaire sont coaxiaux en étant imbriqués l'un dans l'autre.

L'organe secondaire 27 entoure selon cette variante au moins partiellement l'organe primaire 26, un entrefer annulaire e1 séparant l'organe secondaire 27 de l'organe primaire 26.

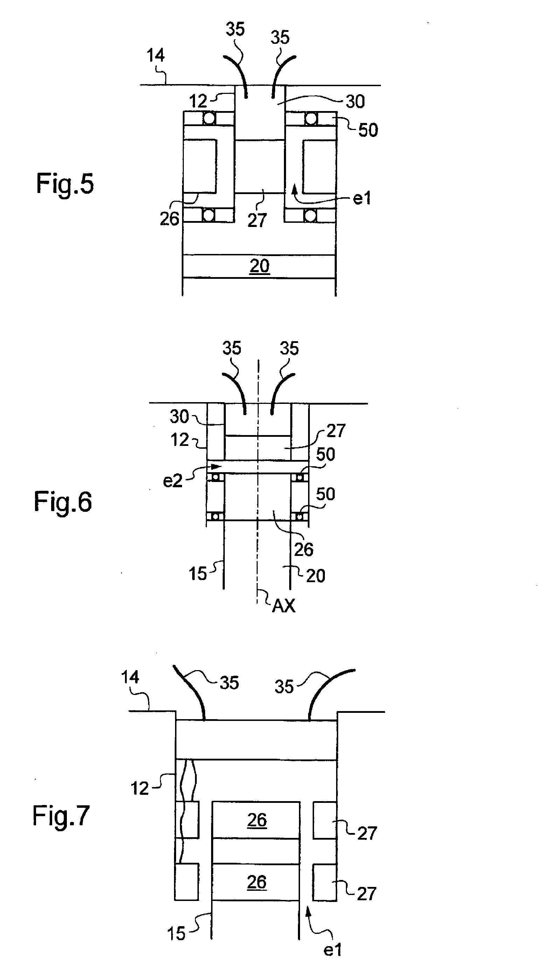

Selon la deuxième variante de la figure 5, l'organe primaire et l'organe secondaire sont coaxiaux en étant aussi imbriqués l'un dans l'autre. Cependant, l'organe primaire 26 entourant au moins partiellement l'organe secondaire 27, un entrefer annulaire e1 sépare encore l'organe secondaire 27 de l'organe primaire 26.

Selon cette variante, le carter tournant peut pénétrer dans le carter non tournant.

Selon la troisième variante de la figure 6, l'organe primaire 26 et l'organe secondaire 27 sont en vis-à-vis. Ainsi, l'organe primaire 26 et l'organe secondaire 27 sont agencés successivement l'un après l'autre selon l'axe de rotation AX du carter tournant 12, un entrefer plan e2 séparant l'organe secondaire 27 de l'organe primaire 26. L'organe secondaire 27 est donc à l'aplomb de l'organe primaire 26.

Selon la variante de la figure 7, le transformateur 25 comporte un organe primaire 26 et un organe secondaire 27 redondés. Le convertisseur non tournant et le cas échéant le convertisseur tournant peuvent aussi être redondés.

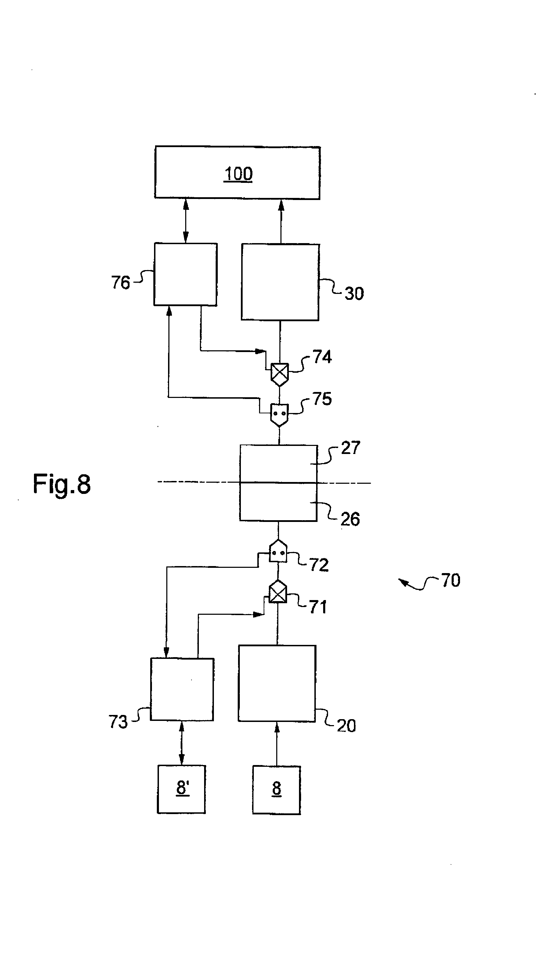

En outre, selon la réalisation de la figure 8, la canne 11 est munie de plus d'un moyen de transmission 70 de signaux électriques par modulation de signal.

Ce moyen de transmission 70 de signaux peut inclure un modulateur non tournant 71 et un démodulateur non tournant 72 agencé en amont du transformateur. Le modulateur non tournant 71 et le démodulateur non tournant 72 peuvent être fixés au carter non tournant 15 de manière à être interfacés entre le convertisseur non tournant 20 et le transformateur 25.

De plus, le modulateur non tournant 71 et le démodulateur non tournant 72 sont liés à une interface non tournante 73 en liaison avec un organe 8' de l'aéronef, pouvant être un moyen de commande ou de signalisation des équipements 100.

En outre, le moyen de transmission 70 de signaux électriques peut inclure un modulateur tournant 74 et un démodulateur tournant 75 agencés en aval du transformateur.

Le modulateur tournant 74 et le démodulateur tournant 75 peuvent être fixés au carter tournant 12, de manière à être par exemple interfacés entre le convertisseur tournant 30 et le transformateur 25.

De plus, le modulateur tournant 74 et le démodulateur tournant 75 sont liés à une interface tournante 76 en liaison avec un équipement 100 du rotor de l'aéronef. Cette interface tournante 76 peut également servir de moyen de commande des équipements 100.

Selon une variante non représentée la transmission de signaux peut être réalisée par des moyens connus par ailleurs.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'alimentation électrique (10) d'au moins un équipement (100) d'un rotor (2) d'aéronef (1) entraîné par un mât (5), ledit dispositif (10) comprenant une canne (11) amovible apte à être solidarisée de manière réversible audit mât (5), ladite canne (11) ayant un carter tournant (12) muni d'un moyen de fixation (14) audit mât et un carter non tournant (15) solidaire d'un moyen de liaison (16) apte à être fixé à un organe de référence (9) dudit aéronef (1),
**caractérisé en ce que** ladite canne (11) comprend :
- un convertisseur non tournant (20) fixé au carter non tournant (15) et muni d'une d'entrée (21) apte à être alimentée par un courant électrique d'entrée provenant d'un réseau électrique (8) dudit aéronef (1), ledit convertisseur non tournant (20) étant un convertisseur électrique générant un courant électrique alternatif à une fréquence supérieure à un kilohertz à partir dudit courant électrique d'entrée, et
- un transformateur (25) rotatif intégré dans la canne (11), ledit transformateur (25) ayant un organe primaire (26) solidarisé au carter non tournant (15) et un organe secondaire (27) solidarisé au carter tournant (12), l'organe primaire (26) étant relié au convertisseur non tournant (20) pour recevoir ledit courant électrique alternatif, et l'organe secondaire (27) étant apte à alimenter électriquement un équipement (100) d'un rotor (2).

2. Dispositif selon la revendication 1,
**caractérisé en ce que** ledit moyen de liaison (16) comporte d'une part un moyen d'accouplement (17) autorisant un désalignement entre la canne (11) et l'organe de référence (9), et d'autre part un crabot de fixation (18) pour la fixation audit organe de référence (9) de la canne (11).

3. Dispositif selon l'une quelconque des revendications 1 à 2,
**caractérisé en ce que** ledit convertisseur non tournant (20) est agencé à l'intérieur dudit carter non tournant (15).

4. Dispositif selon l'une quelconque des revendications 1 à 3,
**caractérisé en ce que** ladite canne (11) est pourvue d'un convertisseur tournant (30) fixé audit carter tournant (12), le convertisseur tournant (30) étant relié audit transformateur (25) et étant muni d'au moins une sortie (31) pour alimenter électriquement un équipement d'un rotor.

5. Dispositif selon la revendication 4,
**caractérisé en ce que** ledit convertisseur tournant (30) est agencé à l'intérieur dudit carter tournant (12).

6. Dispositif selon l'une quelconque des revendications 1 à 5,
**caractérisé en ce que** ledit organe primaire (26) et ledit organe secondaire (27) sont coaxiaux, ledit organe secondaire (27) entourant au moins partiellement ledit organe primaire (26), un entrefer annulaire (e1) séparant ledit organe secondaire (27) dudit organe primaire (26).

7. Dispositif selon l'une quelconque des revendications 1 à 5,
**caractérisé en ce que** ledit organe primaire (26) et ledit organe secondaire (27) sont coaxiaux, ledit organe primaire (26) entourant au moins partiellement ledit organe secondaire (27), un entrefer annulaire (e1) séparant ledit organe secondaire (27) dudit organe primaire (26).

8. Dispositif selon l'une quelconque des revendications 1 à 5,
**caractérisé en ce que** ledit organe primaire (26) et ledit organe secondaire (27) sont agencés successivement l'un après l'autre selon un axe de rotation (AX) du carter tournant (12), un entrefer plan (e2) séparant ledit organe secondaire (27) dudit organe primaire (26).

9. Dispositif selon l'une quelconque des revendications 1 à 8,
**caractérisé en ce que** ledit transformateur (25) comporte un organe primaire (26) et un organe secondaire (27) redondés.

10. Dispositif selon l'une quelconque des revendications 1 à 9,
**caractérisé en ce que** ledit transformateur (25) est un transformateur monophasé.

11. Dispositif selon l'une quelconque des revendications 1 à 10,
**caractérisé en ce que** ledit transformateur (25) est un transformateur haute fréquence fonctionnant sur une plage de fréquence allant de 1 kilohertz à 500 kilohertz.

12. Dispositif selon l'une quelconque des revendications 1 à 11,
**caractérisé en ce que** ladite canne (11) comporte un moyen de transmission (70) de signaux électriques par modulation de signal.

13. Dispositif selon la revendication 12,
**caractérisé en ce que** ledit moyen de transmission (70) de signaux électriques inclut un modulateur non tournant (71) et un démodulateur non tournant (72) agencés en amont du transformateur et coopérant avec une interface non tournante (73), ainsi qu'un modulateur tournant (74) et un démodulateur tournant (75) agencés en aval du transformateur et coopérant avec une interface tournante (76).

14. Aéronef (1) muni d'une cellule (7) et d'un organe de référence (9) non tournant, la cellule (7) portant un rotor (2) tournant entraîné par un mât (5), ledit aéronef (1) ayant au moins un équipement électrique (100),
**caractérisé en ce que** l'aéronef (1) comporte un dispositif d'alimentation électrique (10) dudit équipement (100) selon l'une quelconque des revendications 1 à 13.

## Patentansprüche

1. Vorrichtung (10) zur Stromversorgung mindestens einer Ausrüstung (100) eines Rotors (2) eines Luftfahrzeugs (1), der von einer Rotorwelle (5) angetrieben wird, wobei die Vorrichtung (10) einen abnehmbaren Stab (11) aufweist, der lösbar an der Rotorwelle (5) befestigt werden kann, wobei der Stab (11) ein sich drehendes Gehäuse (12) aufweist, das mit einem Mittel (14) zur Befestigung an der Rotorwelle und mit einem sich nicht drehenden Gehäuse (15) versehen ist, das mit einem Verbindungsmittel (16) fest verbunden ist, das an einem Bezugsorgan (9) des Luftfahrzeugs (1) befestigt werden kann,
**dadurch gekennzeichnet, dass** der Stab (11) aufweist:
- einen sich nicht drehenden Wandler (20), der an dem sich nicht drehenden Gehäuse (15) befestigt ist und mit einem Eingang (21) versehen ist, der mit einem Eingangsstrom gespeist werden kann, der von einem Stromnetz (8) des Luftfahrzeugs (1) kommt, wobei der sich nicht drehende Wandler (20) ein elektrischer Stromrichter ist, der einen elektrischen Wechselstrom mit einer Frequenz ausgehend von dem elektrischen Eingangsstrom erzeugt, die größer als ein Kilohertz ist, und
- einen drehbaren Transformator (25), der in den Stab (11) integriert ist, wobei der Transformator (25) ein primäres Organ (26) aufweist, das mit dem sich nicht drehenden Gehäuse (15) fest verbunden ist, und ein sekundäres Organ (27), das mit dem sich drehenden Gehäuse (12) fest verbunden ist, wobei das primäre Organ (26) mit dem sich nicht drehenden Wandler (20) verbunden ist, um den elektrischen Wechselstrom zu empfangen, und wobei das sekundäre Organ (27) eine Ausrüstung (100) eines Rotors (2) mit Strom versorgen kann.

2. Vorrichtung nach Anspruch 1,
**dadurch gekennzeichnet, dass** das Verbindungsmittel (16) einerseits ein Kupplungsmittel (17) aufweist, das eine Abweichung der Ausrichtung zwischen dem Stab (11) und dem Bezugsorgan (9) erlaubt, und andererseits eine Befestigungsklauenkupplung (18) zum Befestigen des Stabs (11) an dem Bezugsorgan (9).

3. Vorrichtung nach einem der Ansprüche 1 bis 2,
**dadurch gekennzeichnet, dass** der sich nicht drehende Wandler (20) im Inneren des sich nicht drehenden Gehäuses (15) angeordnet ist.

4. Vorrichtung nach einem der Ansprüche 1 bis 3,
**dadurch gekennzeichnet, dass** der Stab (11) mit einem sich drehenden Wandler (30) versehen ist, der an dem sich drehenden Gehäuse (12) befestigt ist, wobei der sich drehende Wandler (30) mit dem Transformator (25) verbunden ist und mit mindestens einem Ausgang (31) zur Stromversorgung einer Ausrüstung des Rotors versehen ist.

5. Vorrichtung nach Anspruch 4,
**dadurch gekennzeichnet, dass** der sich drehende Wandler (30) im Inneren des sich drehendes Gehäuses (12) angeordnet ist.

6. Vorrichtung nach einem der Ansprüche 1 bis 5,
**dadurch gekennzeichnet, dass** das primäre Organ (26) und das sekundäre Organ (27) zueinander koaxial ausgerichtet sind, wobei das sekundäre Organ (27) mindestens teilweise das primäre Organ (26) umgibt, wobei ein ringförmiger Spalt (e1) das sekundäre Organ (27) von dem primären Organ (26) trennt.

7. Vorrichtung nach einem der Ansprüche 1 bis 5,
**dadurch gekennzeichnet, dass** das primäre Organ (26) und das sekundäre Organ (27) zueinander koaxial ausgerichtet sind, wobei das primäre Organ (26) das sekundäre Organ (27) zumindest teilweise umgibt, wobei ein ringförmiger Spalt (e1) das sekundäre Organ (27) von dem primären Organ (26) trennt.

8. Vorrichtung nach einem der Ansprüche 1 bis 5,
**dadurch gekennzeichnet, dass** das primäre Organ (26) und das sekundäre Organ (27) aufeinanderfolgend eins nach dem anderen entlang einer Drehachse (AX) des sich drehenden Gehäuses (12) angeordnet sind, wobei ein ebener Spalt (e2) das sekundäre Organ (27) von dem primären Organ (26) trennt.

9. Vorrichtung nach einem der Ansprüche 1 bis 8,
**dadurch gekennzeichnet, dass** der Transformator (25) ein primäres Organ (26) und ein sekundäres Organ (27), die redundant ausgelegt sind, aufweist.

10. Vorrichtung nach einem der Ansprüche 1 bis 9,
dadurch gekenntzeichnet, dass der Transformator (25) ein einphasiger Transformator ist.

11. Vorrichtung nach einem der Ansprüche 1 bis 10,
**dadurch gekennzeichnet, dass** der Transformator (25) ein Hochfrequenztransformator ist, der in einem Frequenzbereich arbeitet, der von 1 Kilohertz bis 500 Kilohertz reicht.

12. Vorrichtung nach einem der Ansprüche 1 bis 11,
**dadurch gekennzeichnet, dass** der Stab (11) ein Mittel (70) zur Übertragung elektrischer Signale durch Signalmodulation aufweist.

13. Vorrichtung nach Anspruch 12,
**dadurch gekennzeichnet, dass** das Mittel (70) zur Übertragung von elektrischen Signalen einen sich nicht drehenden Wandler (71) und einen sich nicht drehenden Demodulator (72) aufweist, die vor dem Transformator angeordnet sind und mit einer sich nicht drehenden Schnittstelle (73) zusammenwirken, sowie einen sich drehenden Wandler (74) und einen sich drehenden Demodulator (75), die hinter dem Transformator angeordnet sind und mit einer sich drehenden Schnittstelle (76) zusammenwirken.

14. Luftfahrzeug (1) mit einem Rumpf (7) und einem sich nicht drehenden Bezugsorgan (9), wobei der Rumpf (7) einen sich drehenden, von einer Rotorwelle (5) angetriebenen Rotor (2) aufweist, wobei das Luftfahrzeug (1) mindestens eine elektrische Ausrüstung (100) aufweist, **dadurch gekennzeichnet, dass** das Luftfahrzeug (1) eine Stromversorgungsvorrichtung (10) der Ausrüstung (100) nach einem der Ansprüche 1 bis 13 aufweist.

## Claims

1. Device for supplying electric power (10) to at least one piece of equipment (100) of an aircraft (1) rotor (2) driven by a mast (5), said device (10) comprising a removable rod (11) capable of being reversibly secured to said mast (5), said rod (11) having a rotating case (12) provided with a securing means (14) for securing it to said mast and a non-rotating case (15) integral with a connection means (16) capable of being secured to a reference element (9) of said aircraft (1),
**characterised in that** said rod (11) comprises:
- a non-rotating converter (20) secured to the non-rotating case (15) and provided with an input (21) capable of being supplied by an input electric current coming from an electrical network (8) of said aircraft (1), said non-rotating converter (20) being an electrical converter generating an alternating electric current at a frequency above one kilohertz from said input electric current, and
- a rotary transformer (25) integrated into the rod (11), said transformer (25) having a primary element (26) secured to the non-rotating case (15) and a secondary element (27) secured to the rotating case (12), the primary element (26) being connected to the non-rotating converter (20) so as to receive said alternating electric current, and the secondary element (27) being capable of supplying electric power to a piece of equipment (100) of a rotor (2).

2. Device according to claim 1,
**characterised in that** said connection means (16) includes both a coupling means (17) permitting misalignment between the rod (11) and the reference element (9), and also a jaw clutch (18) for securing it to said reference element (9) of the rod (11).

3. Device according to any one of claims 1 to 2,
**characterised in that** said non-rotating converter (20) is disposed inside said non-rotating case (15).

4. Device according to any one of claims 1 to 3,
**characterised in that** said rod (11) is provided with a rotating converter (30) secured to said rotating case (12), the rotating converter (30) being connected to said transformer (25) and being provided with at least one output (31) for supplying electric power to a piece of rotor equipment.

5. Device according to claim 4,
**characterised in that** said rotating converter (30) is disposed inside said rotating case (12).

6. Device according to any one of claims 1 to 5,
**characterised in that** said primary element (26) and said secondary element (27) are coaxial, said secondary element (27) surrounding at least partially said primary element (26), an annular air-gap (e1) separating said secondary element (27) from said primary element (26).

7. Device according to any one of claims 1 to 5,
**characterised in that** said primary element (26) and said secondary element (27) are coaxial, said primary element (26) surrounding at least partially said secondary element (27), an annular air-gap (e1) separating said secondary element (27) from said primary element (26).

8. Device according to any one of claims 1 to 5,
**characterised in that** said primary element (26) and said secondary element (27) are disposed in series one after the other along an axis of rotation (AX) of the rotating case (12), a plane air-gap (e2) separating said secondary element (27) from said primary element (26).

9. Device according to any one of claims 1 to 8,
**characterised in that** said transformer (25) includes a primary element (26) and a secondary element (27) that are redundant.

10. Device according to any one of claims 1 to 9,
**characterised in that** said transformer (25) is a single-phase transformer.

11. Device according to any one of claims 1 to 10,
**characterised in that** said transformer (25) is a high-frequency transformer operating over a frequency range from 1 kilohertz to 500 kilohertz.

12. Device according to any one of claims 1 to 11,
**characterised in that** said rod (11) includes a means for transmitting (70) electrical signals by signal modulation.

13. Device according to claim 12,
**characterised in that** said means for transmitting (70) electrical signals includes a non-rotating modulator (71) and a non-rotating demodulator (72) disposed upstream of the transformer and co-operating with a non-rotating interface (73), together with a rotating modulator (74) and a rotating demodulator (75) disposed downstream of the transformer and co-operating with a rotating interface (76).

14. Aircraft (1) provided with a cell (7) and a non-rotating reference element (9), the cell (7) bearing a rotating rotor (2) driven by a mast (5), said aircraft (1) having at least one piece of electrical equipment (100),
**characterised in that** the aircraft (1) includes a device supplying power (10) for said piece of equipment (100) according to any one of claims 1 to 13.
